# EUROPEAN PATENT APPLICATION

(11) **EP 4 625 786 A1**
(43) Date of publication of application: **01.10.2025**
(21) Application number: 25166148.4
(22) Date of filing: 25.03.2025
(51) Int. Cl.: H02K 41/03

(54) **LINEAR MOTOR, ELECTROMAGNETIC SUSPENSION, AND VEHICLE**

(30) Priority: 29.03.2024 CN 202410378482
(71) Applicant: BYD Company Limited, Shenzhen, Guangdong 518118 (CN)
(72) Inventor: HUANG, Wei, Shenzhen, 518118 (CN); MA, Bingqing, Shenzhen, 518118 (CN); QI, Wenming, Shenzhen, 518118 (CN)
(74) Representative: Taor, Simon Edward William

(57) **Abstract**

The present invention discloses a linear motor, an electromagnetic suspension, and a vehicle. The linear motor includes a stator assembly and a mover assembly. The mover assembly is sleeved on an outer periphery of the stator assembly and the mover assembly and the stator assembly define a first cavity and a second cavity. The first cavity and the second cavity are separately located on two sides of an axial direction of the stator assembly for the stator assembly and the mover assembly to move relative to each other. The first cavity is in communication with the second cavity. At least one of the first cavity and the second cavity is in communication with external space of the mover assembly. According to the linear motor in embodiments of the present invention, at least one of the first cavity and the second cavity that are located on the two sides of the stator assembly is in communication with the external space of the mover assembly, so that air in the first cavity and air in the second cavity can be directly or indirectly exchanged with air in the external space of the mover assembly. This helps reduce a pressure difference between the first cavity and the second cavity, thereby reducing thrust fluctuation caused by an impact of the pressure difference on reciprocation of the linear motor.

## Description

### FIELD

The present invention relates to the field of vehicle technologies, and in particular, to a linear motor, an electromagnetic suspension, and a vehicle.

### BACKGROUND

An electromagnetic suspension is connected between a vehicle body and wheels of a vehicle, and reduces vibration of the vehicle body through a thrust generated by a linear motor. When the linear motor is in operation, relative movement is generated between a mover assembly and a stator assembly in the linear motor. In this process, upper space and lower space of the mover assembly are frequently compressed or expanded, resulting in a relatively large pressure difference between the upper space and the lower space of the mover assembly. Reciprocation of the linear motor is affected by the pressure difference, resulting in thrust fluctuation. In addition, a relatively large energy loss is caused due to an increase in a pressure of the upper space and a pressure of the lower space.

### SUMMARY

The present invention aims to resolve at least one of the technical problems existing in the related art. To this end, an objective of the present invention is to provide a linear motor. At least one of a first cavity and a second cavity that are located on two sides of a stator assembly is in communication with external space of a mover assembly, so that air in the first cavity and air in the second cavity can be directly or indirectly exchanged with air in the external space of the mover assembly. This helps quickly adjust a pressure in the first cavity and a pressure in the second cavity, and reduce a pressure difference between the first cavity and the second cavity, thereby reducing thrust fluctuation caused by an impact of the pressure difference on reciprocation of the linear motor, and reducing an energy loss.

The present invention provides an electromagnetic suspension having the foregoing linear motor.

The present invention further provides a vehicle having the foregoing electromagnetic suspension.

A linear motor according to an embodiment of a first aspect of the present invention includes: a stator assembly; and a mover assembly, being sleeved on an outer periphery of the stator assembly and the mover assembly and the stator assembly defining a first cavity and a second cavity. The first cavity and the second cavity are separately located on two sides of an axial direction of the stator assembly for the stator assembly and the mover assembly to move relative to each other. The first cavity is in communication with the second cavity. At least one of the first cavity and the second cavity is in communication with external space of the mover assembly.

According to the linear motor in this embodiment of the present invention, at least one of the first cavity and the second cavity that are located on the two sides of the stator assembly is in communication with the external space of the mover assembly, so that air in the first cavity and air in the second cavity can be directly or indirectly exchanged with air in the external space of the mover assembly. This helps quickly adjust a pressure in the first cavity and a pressure in the second cavity, and reduce a pressure difference between the first cavity and the second cavity, thereby reducing thrust fluctuation caused by an impact of the pressure difference on reciprocation of the linear motor, and reducing an energy loss.

According to some embodiments of the present invention, an air gap is provided between the mover assembly and the stator assembly, and the first cavity is in communication with the second cavity through the air gap.

According to some embodiments of the present invention, a communication groove is provided on the mover assembly, and the communication groove communicates the first cavity with the second cavity.

According to some embodiments of the present invention, a breathable valve is arranged on the mover assembly, and the breathable valve communicates the first cavity with the external space of the mover assembly.

According to some embodiments of the present invention, the breathable valve includes a valve body and a waterproof breathable membrane. A vent channel communicating the first cavity with the external space of the mover assembly is formed in the valve body. The waterproof breathable membrane is arranged in the vent channel.

According to some embodiments of the present invention, the vent channel includes a first channel section and a second channel section that are located on two opposite sides of the waterproof breathable membrane. The first channel section is adjacent to the first cavity relative to the second channel section and is in communication with the first cavity. A vent hole communicating the first channel section with the external space of the mover assembly is formed on a wall of the second channel section.

According to some embodiments of the present invention, the valve body includes a valve main body and a valve cover. The vent channel is formed on the valve main body. The valve cover is connected to an end of the valve main body that is away from the first cavity and covers an end of the second channel section that is away from the waterproof breathable membrane. The vent hole is formed on a peripheral wall of the second channel section.

According to some embodiments of the present invention, a plurality of vent holes are provided, and the plurality of vent holes are spaced apart along a circumferential direction of the second channel section.

According to some embodiments of the present invention, a first step surface is formed on an inner wall of the vent channel. The first step surface is located between the first channel section and the second channel section. The waterproof breathable membrane is fixed on the first step surface.

According to some embodiments of the present invention, a cross-sectional area of the second channel section is greater than a cross-sectional area of the first channel section. The waterproof breathable membrane is located in the second channel section.

According to some embodiments of the present invention, a mounting hole is provided on the mover assembly. The mounting hole includes a first hole section and a second hole section that are provided along an axial direction of the mounting hole. The first hole section is close to the first cavity relative to the second hole section and is in communication with the first cavity. The valve body is connected to the first hole section. A vent groove that is in communication with the external space of the mover assembly is defined between an outer peripheral wall of the valve body and an inner peripheral wall of the second hole section. The vent groove is located on an outer peripheral side of the second channel section and is in communication with the second channel section through the vent hole.

According to some embodiments of the present invention, the outer peripheral wall of the valve body is spaced apart from the inner peripheral wall of the second hole section to form the vent groove.

According to some embodiments of the present invention, the breathable valve is mounted on a peripheral wall of the mover assembly, and the breathable valve does not protrude from an outer peripheral wall surface of the mover assembly.

According to some embodiments of the present invention, a mounting hole is provided on the mover assembly, and the breathable valve is mounted in the mounting hole. The mounting hole includes the first hole section and the second hole section that are provided along the axial direction of the mounting hole. The first hole section is close to the first cavity relative to the second hole section and is in communication with the first cavity. The breathable valve is connected to the first hole section. A second step surface is formed between the first hole section and the second hole section. A third step surface is formed on the outer peripheral wall of the breathable valve. The third step surface abuts against or is connected to the second step surface.

According to some embodiments of the present invention, a cross-sectional area of the second hole section is greater than a cross-sectional area of the first hole section.

According to some embodiments of the present invention, the linear motor includes a sealing member. A sealing groove is formed on the third step surface. The sealing member is accommodated in the sealing groove and sealingly abuts against or is sealingly connected to the second step surface.

According to some embodiments of the present invention, a baffle is arranged on the mover assembly, and the baffle is located in the first cavity. The baffle is arranged opposite to the breathable valve and is spaced apart from the breathable valve.

According to some embodiments of the present invention, the baffle and the mover assembly are integrally formed.

According to some embodiments of the present invention, the axial direction of the stator assembly extends along an up-down direction. The first cavity is located above the stator assembly, and the second cavity is located below the stator assembly.

According to some embodiments of the present invention, the breathable valve is arranged at an upper end of the mover assembly.

According to some embodiments of the present invention, the mover assembly includes a motor housing and magnetic steel. The magnetic steel is fixed on an inner wall of the motor housing. The breathable valve is arranged on the motor housing and located on a side of an axial direction of the magnetic steel.

According to some embodiments of the present invention, a communication groove is formed on the inner peripheral wall of the motor housing. The communication groove is partly located in the first cavity and partly located in the second cavity.

According to some embodiments of the present invention, the linear motor further includes a dustproof cover. The dustproof cover covers an outer peripheral side of the mover assembly, and the dustproof cover and the mover assembly jointly define a dustproof cavity. The first cavity is in communication with the dustproof cavity through the breathable valve. The dustproof cavity forms at least a part of the external space of the mover assembly.

According to some embodiments of the present invention, the linear motor includes a stator shaft core. The stator assembly is sleeved on an outer periphery of the stator shaft core and is fixed relative to the stator shaft core. A guide channel extending along an axial direction of the stator shaft core is formed on the stator shaft core. A guide rod extending along an axial direction of the mover assembly is arranged on the mover assembly. The guide rod is slidably accommodated in the guide channel along the axial direction of the stator assembly.

An electromagnetic suspension according to an embodiment of a second aspect of the present invention includes: the linear motor according to the embodiment of the first aspect of the present invention.

According to the electromagnetic suspension in the embodiment of the present invention, the foregoing linear motor is arranged, and at least one of the first cavity and the second cavity that are located on the two sides of the stator assembly is in communication with the external space of the mover assembly, so that air in the first cavity and air in the second cavity can be directly or indirectly exchanged with air in the external space of the mover assembly. This helps quickly adjust a pressure in the first cavity and a pressure in the second cavity, and reduce a pressure difference between the first cavity and the second cavity, thereby reducing thrust fluctuation caused by an impact of the pressure difference on reciprocation of the linear motor, and reducing an energy loss.

A vehicle according to an embodiment of a third aspect of the present invention includes: the electromagnetic suspension according to the embodiment of the second aspect of the present invention.

According to the vehicle in the embodiment of the present invention, the foregoing electromagnetic suspension is arranged, where the electromagnetic suspension includes the linear motor, and at least one of the first cavity and the second cavity that are located on the two sides of the stator assembly is in communication with the external space of the mover assembly, so that air in the first cavity and air in the second cavity can be directly or indirectly exchanged with air in the external space of the mover assembly. This helps quickly adjust a pressure in the first cavity and a pressure in the second cavity, and reduce a pressure difference between the first cavity and the second cavity, thereby reducing thrust fluctuation caused by an impact of the pressure difference on reciprocation of the linear motor, and reducing an energy loss.

The additional aspects and advantages of the present invention will be set forth in part in the following description, and some of the additional aspects and advantages will become apparent from the following description, or will be learned from practice of the present invention.

### BRIEF DESCRIPTION OF THE DRAWINGS

The foregoing and/or additional aspects and advantages of embodiments of the present invention will become apparent and easily understood in the description of the embodiments made with reference to the following accompanying drawings.
FIG. 1 is a cross-sectional view of a linear motor according to some embodiments of the present invention;
FIG. 2 is an enlarged view of a position A in FIG. 1;
FIG. 3 is a partial cross-sectional view of the linear motor in FIG. 1;
FIG. 4 is an enlarged view of a position B in FIG. 3;
FIG. 5 is a cross-sectional view of assembly of a stator assembly and a mover assembly in the linear motor in FIG. 1; and
FIG. 6 is a schematic diagram of a mover assembly in the linear motor in FIG. 1.

### DETAILED DESCRIPTION

The following describes in detail embodiments of the present invention. Examples of the embodiments are shown in the accompanying drawings, where reference signs that are the same or similar from beginning to end represent same or similar components or components that have same or similar functions. The embodiments that are described with reference to the accompanying drawings are exemplary, and are only used to interpret the present invention and cannot be understood as a limitation on the present invention.

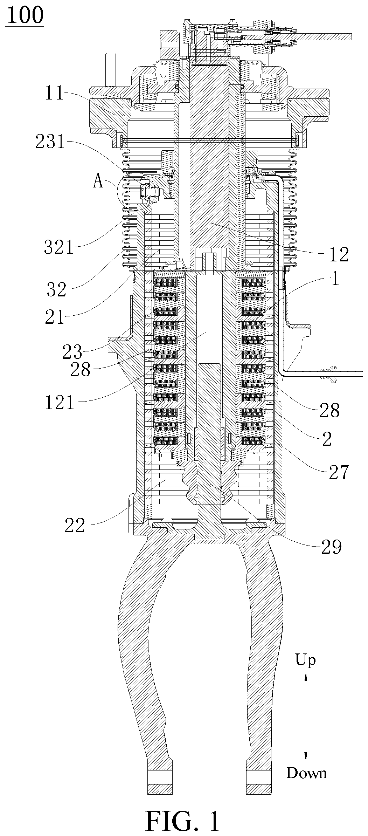

A linear motor 100 according to the embodiments of the present invention is described below with reference to FIG. 1 to FIG. 6.

Referring to FIG. 1, FIG. 3, and FIG. 5, the linear motor 100 according to an embodiment of a first aspect of the present invention includes a stator assembly 1 and a mover assembly 2. When the linear motor 100 is in operation, relative movement may be generated between the stator assembly 1 and the mover assembly 2 along an axial direction of the linear motor 100. When the linear motor 100 is used in an electromagnetic suspension of a vehicle, the stator assembly 1 may be connected to a vehicle body, and the mover assembly 2 may be connected to a wheel. For example, an upper end of the stator assembly 1 is connected to the vehicle body, and a lower end of the mover assembly 2 is connected to the wheel.

The mover assembly 2 is sleeved on an outer periphery of the stator assembly 1, and the mover assembly 2 and the stator assembly 1 define a first cavity 21 and a second cavity 22. The first cavity 21 and the second cavity 22 are separately located on two sides of an axial direction of the stator assembly 1 for the stator assembly 1 and the mover assembly 2 to move relative to each other. Both the first cavity 21 and the second cavity 22 are in communication with external space of the mover assembly 2.

The first cavity 21 and the second cavity 22 are separately located on the two sides of the axial direction of the stator assembly 1, so that the stator assembly 1 and the mover assembly 2 can move relative to each other along the axial direction of the linear motor 100. For example, when the linear motor 100 is in operation, the mover assembly 2 may perform reciprocation relative to the stator assembly 1 along the axial direction of the linear motor 100. Both a space size of the first cavity 21 and a space size of the second cavity 22 change. Therefore, a pressure in the first cavity 21 and a pressure in the second cavity 22 also change.

That the first cavity 21 is in communication with the second cavity 22, and at least one of the first cavity 21 and the second cavity 22 is in communication with the external space of the mover assembly 2 may include the following cases: For example, both the first cavity 21 and the second cavity 22 are in direct communication with the external space of the mover assembly 2. In this case, air in the first cavity 21 may be directly exchanged with air in the external space of the mover assembly 2, and air in the second cavity 22 may be directly exchanged with the air in the external space of the mover assembly 2. For another example, the first cavity 21 is in direct communication with the external space of the mover assembly 2, and the second cavity 22 is in communication with the first cavity 21, so that the second cavity 22 is in indirect communication with the external space of the mover assembly 2. In this case, air in the first cavity 21 may be directly exchanged with air in the external space of the mover assembly 2, and air in the second cavity 22 may be indirectly exchanged with the air in the external space of the mover assembly 2. For another example, the second cavity 22 is in direct communication with the external space of the mover assembly 2, and the first cavity 21 is in communication with the second cavity 22, so that the first cavity 21 is in indirect communication with the external space of the mover assembly 2. In this case, air in the second cavity 22 may be directly exchanged with air in the external space of the mover assembly 2, and air in the first cavity 21 may be indirectly exchanged with the air in the external space of the mover assembly 2.

The external space of the mover assembly 2 may be space located outside the linear motor 100. When the external space of the mover assembly 2 is the space located outside the linear motor 100, the external space of the mover assembly 2 may be a part of external air space. The external space of the mover assembly 2 may alternatively be space located inside the linear motor 100. When the external space of the mover assembly 2 is the space located inside the linear motor 100, the external space of the mover assembly 2 may be in communication with the external air, or the external space of the mover assembly 2 may be isolated from the external air.

For example, the air in the external space of the mover assembly 2 may be exchanged with the air in the first cavity 21 and the air in the second cavity 22. This helps quickly reduce a pressure difference between the first cavity 21 and the second cavity 22 and reduce thrust fluctuation caused by an impact of the pressure difference on reciprocation of the mover assembly 2, thereby improving sensitivity of the reciprocation of the mover assembly 2 between the first cavity 21 and the second cavity 22.

When the linear motor 100 is in operation, relative movement may be generated between the stator assembly 1 and the mover assembly 2 along the axial direction of the linear motor 100, including the following cases: For example, when the linear motor 100 is in operation, the stator assembly 1 is does not move, and the mover assembly 2 moves along the axial direction of the linear motor 100. For another example, the mover assembly 2 does not move, and the stator assembly 1 moves along the axial direction of the linear motor 100. For another example, both the stator assembly 1 and the mover assembly 2 move along the axial direction of the linear motor 100.

In some embodiments, the mover assembly 2 may be a primary assembly, and the stator assembly 1 may be a secondary assembly. Alternatively, the mover assembly 2 may be a secondary assembly, and the stator assembly 1 may be a primary assembly.

According to the linear motor 100 in this embodiment of the present invention, at least one of the first cavity 21 and the second cavity 22 that are located on the two sides of the stator assembly 1 is in communication with the external space of the mover assembly 2, so that the air in the first cavity 21 and the air in the second cavity 22 can be directly or indirectly exchanged with the air in the external space of the mover assembly 2. This helps quickly adjust the pressure in the first cavity 21 and the pressure in the second cavity 22, and reduce the pressure difference between the first cavity 21 and the second cavity 22, thereby reducing the thrust fluctuation caused by the impact of the pressure difference on the reciprocation of the linear motor 100, and reducing an energy loss.

Referring to FIG. 1, FIG. 3, and FIG. 5, according to some embodiments of the present invention, an air gap 23 is provided between the mover assembly 2 and the stator assembly 1. The first cavity 21 is in communication with the second cavity 22 through the air gap 23, so that the air gap 23 communicates the first cavity 21 with the second cavity 22. The air in the first cavity 21 and the air in the second cavity 22 may be exchanged through the air gap 23, so that the air in the first cavity 21 and the air in the second cavity 22 can flow between the first cavity 21 and the second cavity 22, thereby reducing the pressure difference between the first cavity 21 and the second cavity 22.

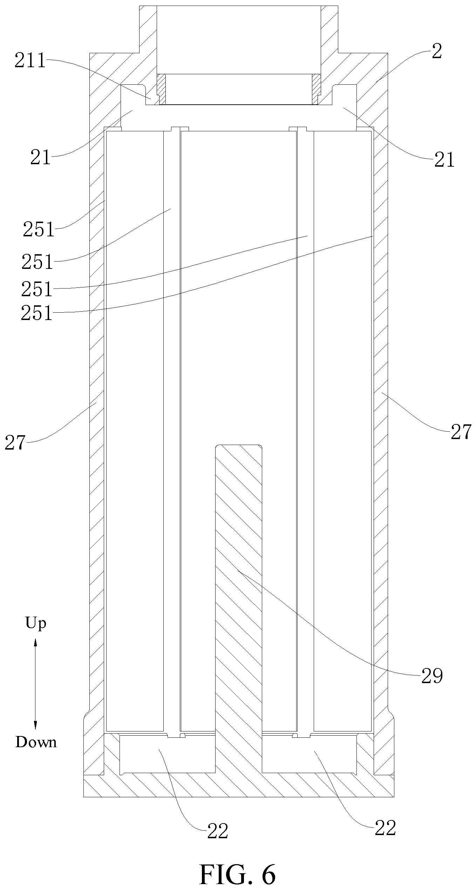

Referring to FIG. 6, according to some embodiments of the present invention, a communication groove 251 is provided on the mover assembly 2, and the communication groove 251 communicates the first cavity 21 with the second cavity 22. For example, the communication groove 251 may extend along an axial direction of the mover assembly 2, and two ends of the communication groove 251 in a length direction are separately located in the first cavity 21 and the second cavity 22 to communicate the first cavity 21 with the second cavity 22. In this way, an air exchange area between the first cavity 21 and the second cavity 22 can be increased, thereby accelerating reduction of the pressure difference between the first cavity 21 and the second cavity 22.

In some embodiments, the first cavity 21 may be in communication with the second cavity 22 through the air gap 23 and the communication groove 251, so that the air exchange area between the first cavity 21 and the second cavity 22 is further increased, thereby further accelerating the reduction of the pressure difference between the first cavity 21 and the second cavity 22.

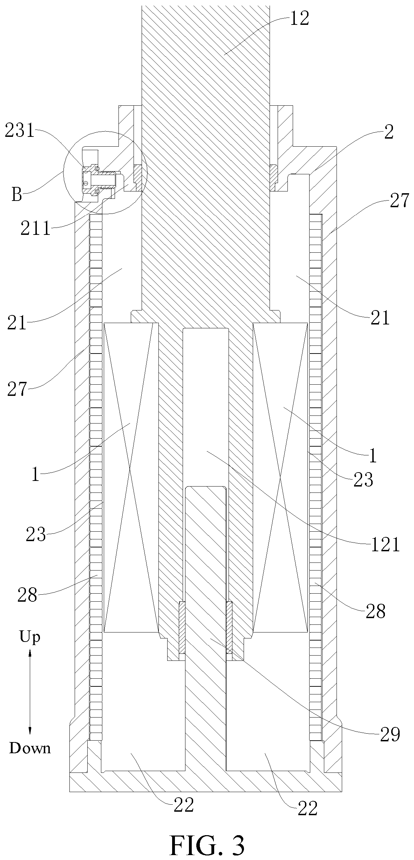

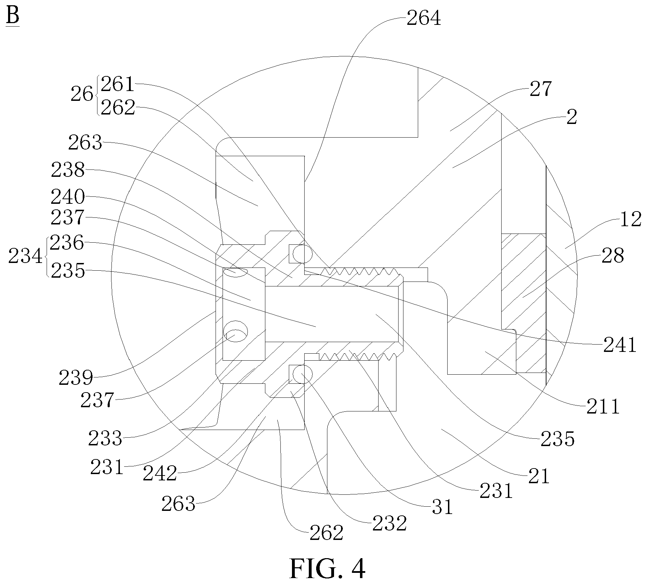

Referring to FIG. 3 and FIG. 4, according to some embodiments of the present invention, a breathable valve 231 is arranged on the mover assembly 2, and the breathable valve 231 communicates the first cavity 21 with the external space of the mover assembly 2. The breathable valve 231 may communicate the first cavity 21 with the external space of the mover assembly 2, so that the air in the first cavity 21 can be exchanged with the air in the external space of the mover assembly 2. This helps quickly adjust the pressure in the first cavity 21.

Referring to FIG. 3 and FIG. 4, according to some embodiments of the present invention, the breathable valve 231 includes a valve body 232 and a waterproof breathable membrane 233. A vent channel 234 communicating the first cavity 21 with the external space of the mover assembly 2 is formed in the valve body 232. The waterproof breathable membrane 233 is arranged in the vent channel 234. The vent channel 234 may facilitate airflow between the first cavity 21 and the external space of the mover assembly 2, to implement adjustment on the pressure in the first cavity 21. In addition, the waterproof breathable membrane 233 is arranged in the vent channel 234, to effectively prevent water from entering the first cavity 21.

Referring to FIG. 3 and FIG. 4, according to some embodiments of the present invention, the vent channel 234 includes a first channel section 235 and a second channel section 236 that are located on two opposite sides of the waterproof breathable membrane 233. The first channel section 235 is adjacent to the first cavity 21 relative to the second channel section 236, and the first channel section 235 is in communication with the first cavity 21. A vent hole 237 communicating the first channel section 235 with the external space of the mover assembly 2 is formed on a wall of the second channel section 236. The air in the first cavity 21 may sequentially pass through the first channel section 235 and the second channel section 236, and pass through the vent hole 237, to implement air exchange between the air in the first cavity 21 and the air in the external space of the mover assembly 2, thereby implementing adjustment on the pressure in the first cavity 21.

For example, when the linear motor 100 is in operation, the air in the first cavity 21 flows into the first channel section 235, and the air in the first channel section 235 may flow to the external space of the mover assembly 2 through the vent hole 237. Alternatively, the air in the external space of the mover assembly 2 flows into the first channel section 235 through the vent hole 237, and the air in the first channel section 235 flows into the first cavity 21, to complete the air exchange process between the air in the first cavity 21 and the air in the external space of the mover assembly 2.

Referring to FIG. 3 and FIG. 4, according to some embodiments of the present invention, the valve body 232 includes a valve main body 238 and a valve cover 239. The vent channel 234 is formed on the valve main body 238. The valve cover 239 is connected to an end of the valve main body 238 that is away from the first cavity 21 and covers an end of the second channel section 236 that is away from the waterproof breathable membrane 233. The vent hole 237 is formed on a peripheral wall of the second channel section 236. The valve cover 239 is fixed at an end of the valve main body 238 that is away from the first cavity 21 to close the vent channel 234. In addition, the valve cover 239 covers an end of the second channel section 236 that is away from the waterproof breathable membrane 233, which can play a certain protective role on the waterproof breathable membrane 233, thereby prolonging a service life of the waterproof breathable membrane 233.

The vent hole 237 is formed on the peripheral wall of the second channel section 236, so that air can flow through the vent hole 237. The waterproof breathable membrane 233 can ensure effective exchange of the air at the valve body 232, and can also prevent moisture or other liquid from entering the first channel section 235. Therefore, when the air in the first cavity 21 is exchanged with the air in the external space of the mover assembly 2, the moisture or the other liquid can be prevented from flowing into the first cavity 21 through the first channel section 235.

Referring to FIG. 3 and FIG. 4, according to some embodiments of the present invention, a plurality of vent holes 237 are provided. The plurality of vent holes 237 are spaced apart along a circumferential direction of the second channel section 236. The plurality of vent holes 237 can increase a vent area of the valve body 232, thereby enhancing an effect of airflow at the valve body 232. In addition, the plurality of vent holes 237 are spaced apart along the circumferential direction of the second channel section 236, so that accumulated water in the second channel section flows out of the vent holes 237.

In the description of embodiments of the present invention, "a plurality of" means two or more.

Referring to FIG. 3 and FIG. 4, according to some embodiments of the present invention, a first step surface 240 is formed on an inner wall of the vent channel 234. The first step surface 240 is located between the first channel section 235 and the second channel section 236. The waterproof breathable membrane 233 is fixed on the first step surface 240. The first step surface 240 facilitates fixing of the waterproof breathable membrane 233 in the vent channel 234 of the valve body 232, so that an overall structure of the waterproof breathable membrane 233 and the valve body 232 is compact.

Referring to FIG. 3 and FIG. 4, according to some embodiments of the present invention, a cross-sectional area of the second channel section 236 is greater than a cross-sectional area of the first channel section 235. The waterproof breathable membrane 233 is located in the second channel section 236. Because the waterproof breathable membrane 233 is fixed in the second channel section 236, and the cross-sectional area of the second channel section 236 is greater than the cross-sectional area of the first channel section 235, a speed of airflow can be increased. In this way, an air exchange rate between the first cavity 21 and the external space of the mover assembly 2 is increased, and quick adjustment on the pressure in the first cavity 21 is implemented.

When the air in the first cavity 21 flows to the external space of the mover assembly 2, the air in the first cavity 21 flows from the first channel section 235 to the second channel section 236 in the vent channel 234. The waterproof breathable membrane 233 is located in the second channel section 236. Because the cross-sectional area of the second channel section 236 is greater than the cross-sectional area of the first channel section 235, an increase of the cross-sectional area of the vent channel 234 can help increase the speed of the airflow. In this way, the air exchange rate between the first cavity 21 and the external space of the mover assembly 2 is increased, and adjustment on the pressure in the first cavity 21 is accelerated.

Referring to FIG. 3 and FIG. 4, according to some embodiments of the present invention, a mounting hole 26 is provided on the mover assembly 2. The mounting hole 26 includes a first hole section 261 and a second hole section 262 that are provided along an axial direction of the mounting hole 26. The first hole section 261 is close to the first cavity 21 relative to the second hole section 262 and is in communication with the first cavity 21. The breathable valve 231 is connected to the first hole section 261. A vent groove 263 that is in communication with the external space of the mover assembly 2 is defined between an outer peripheral wall of the valve body 232 and an inner peripheral wall of the second hole section 262. The vent groove 263 is located on an outer peripheral side of the second channel section 236, and the vent groove 263 is in communication with the second channel section 236 through the vent holes 237.

The breathable valve 231 is connected to the first hole section 261. The first hole section 261 is in communication with the first cavity 21. The vent groove 263 that is in communication with the external space of the mover assembly 2 is defined between the outer peripheral wall of the valve body 232 and the inner peripheral wall of the second hole section 262. The vent groove 263 is in communication with the second channel section 236 through the vent holes 237. In this way, air exchange is completed between the first cavity 21 and the external space of the mover assembly 2 through the breathable valve 231, to adjust the pressure in the first cavity 21.

Referring to FIG. 3 and FIG. 4, according to some embodiments of the present invention, the outer peripheral wall of the valve body 232 is spaced apart from the inner peripheral wall of the second hole section 262 to form the vent groove 263. The air in the external space of the mover assembly 2 may flow through the vent groove 263. The outer peripheral wall of the valve body 232 is spaced apart from the inner peripheral wall of the second hole section 262. For example, the vent groove 263 may be in a shape of a ring extending along a circumferential direction of the inner peripheral wall of the second hole section 262, so that an air contact area between the valve body 232 and the external space of the mover assembly 2 can be increased. In this way, exchange efficiency of the air in the first cavity 21 through the vent groove 263 is improved, a speed of air exchange between the first cavity 21 and the external space of the mover assembly 2 through the valve body 232 is increased, and quick adjustment on the pressure in the first cavity 21 is implemented.

Referring to FIG. 3 and FIG. 4, according to some embodiments of the present invention, the breathable valve 231 is mounted on a peripheral wall of the mover assembly 2, and the breathable valve 231 does not protrude from an outer peripheral wall surface of the mover assembly 2. The breathable valve 231 is arranged on the peripheral wall of the mover assembly 2, so that air in the mover assembly 2 quickly flows to the external space of the mover assembly 2 through the breathable valve 231, and adjustment on the pressure in the mover assembly 2 can be accelerated. In addition, the breathable valve 231 does not protrude from the outer peripheral wall surface of the mover assembly 2, so that an overall structure of the breathable valve 231 and the mover assembly 2 can be more compact, and interference that is between the breathable valve 231 and a structure outside the mover assembly 2 and that is caused by the breathable valve 231 protruding from the outer peripheral wall surface of the mover assembly 2 can be avoided.

Referring to FIG. 3 and FIG. 4, according to some embodiments of the present invention, the mounting hole 26 is provided on the mover assembly 2, and the breathable valve 231 is mounted in the mounting hole 26. The breathable valve 231 is configured to communicate the first cavity 21 with the external space of the mover assembly 2. The mounting hole 26 may facilitate the mounting of the breathable valve 231 on the mover assembly 2.

The breathable valve 231 communicates the first cavity 21 with the external space of the mover assembly 2, which facilitates air exchange between the external space of the mover assembly 2 and the first cavity 21, and facilitates quick adjustment on the pressure in the first cavity 21. In addition, the breathable valve 231 may also play a role of dustproof and waterproof, to prevent moisture or dust from entering the inside of the mover assembly 2, thereby improving reliability of the linear motor 100 and prolonging a service life of the linear motor 100.

Referring to FIG. 3 and FIG. 4, according to some embodiments of the present invention, the breathable valve 231 is detachably mounted in the mounting hole 26, to facilitate maintenance or replacement of the breathable valve 231.

Referring to FIG. 3 and FIG. 4, according to some embodiments of the present invention, the breathable valve 231 is threadedly connected to the mounting hole 26. In this way, a connecting manner between the breathable valve 231 and the mover assembly 2 is simple and has strong stability, which facilitates detachment or mounting of the breathable valve 231 on the mover assembly 2.

Referring to FIG. 3 and FIG. 4, according to some embodiments of the present invention, the mounting hole 26 includes the first hole section 261 and the second hole section 262 that are provided along the axial direction of the mounting hole 26. The first hole section 261 is close to the first cavity 21 relative to the second hole section 262 and is in communication with the first cavity 21. The valve body 232 is connected to the first hole section 261. A second step surface 264 is formed between the first hole section 261 and the second hole section 262. A third step surface 241 is formed on the outer peripheral wall of the breathable valve 231. The third step surface 241 abuts against or is connected to the second step surface 264. In this way, a connecting manner between the breathable valve 231 and the mounting hole 26 is simple and has strong stability. Through cooperation between the third step surface 241 and the second step surface 264, it can be ensured that an assembly position between the breathable valve 231 and the mounting hole 26 is accurate.

Referring to FIG. 3 and FIG. 4, according to some embodiments of the present invention, a cross-sectional area of the second hole section 262 is greater than a cross-sectional area of the first hole section 261. The first hole section 261 is close to the first cavity 21 relative to the second hole section 262 and is in communication with the first cavity 21, and the cross-sectional area of the second hole section 262 is greater than the cross-sectional area of the first hole section 261. Therefore, convenience of assembling the breathable valve 231 in the mounting hole 26 can be improved.

Referring to FIG. 3 and FIG. 4, according to some embodiments of the present invention, the linear motor 100 includes a sealing member 31. A sealing groove 242 is formed on the third step surface 241. The sealing member 31 is accommodated in the sealing groove 242, and the sealing member 31 sealingly abuts against or is sealingly connected to the second step surface 264. The sealing groove 242 can facilitate mounting of the sealing member 31. The sealing member 31 is accommodated in the sealing groove 242, so that an overall structure of the sealing member 31 and the linear motor 100 can be compact. In addition, the sealing member 31 sealingly abuts against or is sealingly connected to the second step surface 264, so that a sealing effect between the breathable valve 231 and the mounting hole 26 can be enhanced.

Referring to FIG. 3 and FIG. 4, according to some embodiments of the present invention, a baffle 211 is arranged on the mover assembly 2, and the baffle 211 is located in the first cavity 21. The baffle 211 is arranged opposite to the breathable valve 231, and the baffle 211 is spaced apart from the breathable valve 231. The baffle 211 can play a certain protective role on the breathable valve 231. The baffle 211 can block liquid (for example, oil) inside the first cavity 21 from entering the breathable valve 231, and can prevent the breathable valve 231 from failing to operate normally or a ventilation effect of the breathable valve 231 from being weakened due to the liquid (for example, the oil) entering the breathable valve 231.

Referring to FIG. 3 and FIG. 4, according to some embodiments of the present invention, the baffle 211 and the mover assembly 2 are integrally formed. In this way, overall structural strength of the linear motor 100 can be improved, and an assembly procedure between the baffle 211 and the mover assembly 2 is omitted, to improve production efficiency.

In some embodiments, the mover assembly 2 may include a motor housing 27. The baffle 211 and the motor housing 27 are integrally formed, and the baffle 211 is located above the first cavity 21. The baffle 211 is arranged opposite to the breathable valve 231, and the baffle 211 is spaced apart from the breathable valve 231. The baffle 211 can play a certain protective role on the breathable valve 231, and can prevent the liquid (for example, the oil) inside the first cavity 21 from splashing into the breathable valve 231.

Referring to FIG. 1, FIG. 3, and FIG. 5, according to some embodiments of the present invention, the axial direction of the stator assembly 1 extends along an up-down direction. The first cavity 21 is located above the stator assembly 1, and the second cavity 22 is located below the stator assembly 1. Liquid (for example, oil) inside the second cavity 22 flows downward due to gravity of the liquid. The first cavity 21 is located above the stator assembly 1, and the second cavity 22 is located below the stator assembly 1, so that a possibility that the breathable valve 231 fails to operate normally due to the liquid inside the second cavity 22 entering the breathable valve 231 that communicates the first cavity 21 with the external space of the mover assembly 2 can be avoided.

Referring to FIG. 3, according to some embodiments of the present invention, the breathable valve 231 is arranged at an upper end of the mover assembly 2. Liquid (for example, oil) inside the mover assembly 2 may flow downward due to gravity of the liquid, and air inside the mover assembly 2 may flow upward due to features of the air. The breathable valve 231 is located at the upper end of the mover assembly 2, so that the ventilation effect of the breathable valve 231 can be prevented from being affected due to other substances flowing into the breathable valve 231, and it is convenient for the air to flow into the external space of the mover assembly 2 through the breathable valve 231.

Referring to FIG. 1 and FIG. 3, according to some embodiments of the present invention, the mover assembly 2 includes the motor housing 27 and magnetic steel 28. The magnetic steel 28 is fixed on an inner wall of the motor housing 27. For example, when the linear motor 100 is in operation, the magnetic steel 28 and the motor housing 27 move relative to the stator assembly 1 along the axial direction of the linear motor 100.

The breathable valve 231 is arranged on the motor housing 27, and the breathable valve 231 is located on a side of an axial direction of the magnetic steel 28. Air inside the motor housing 27 may flow to outside of the motor housing 27 through the breathable valve 231. In this way, adjustment on pressure in the motor housing 27 is implemented, and deformation of the motor housing 27 due to an excessive internal pressure of the motor housing 27 can be avoided. In addition, the breathable valve 231 is located on a side of the axial direction of the magnetic steel 28. In this way, damage to integrity of the magnetic steel 28 due to mounting of the breathable valve 231 can be avoided, functions of the magnetic steel 28 and the breathable valve 231 can be normally operated, and an overall structure of the magnetic steel 28 and the breathable valve 231 can be compact.

The mover assembly 2 may be a primary assembly, and the stator assembly 1 may be a secondary assembly. In this case, the mover assembly 2 includes the motor housing, an iron core, and a winding. The iron core is arranged on an inner wall of the motor housing, and the winding is arranged on the iron core. The stator assembly 1 includes the magnetic steel. Alternatively, the mover assembly 2 may be a secondary assembly and the stator assembly 1 may be a primary assembly. The mover assembly 2 includes the motor housing 27 and the magnetic steel 28. The magnetic steel 28 is mounted on the inner wall of the motor housing 27. The stator assembly 1 includes an iron core and a winding. The winding is mounted on the iron core.

Referring to FIG. 6, according to some embodiments of the present invention, the communication groove 251 is formed on an inner peripheral wall of the motor housing 27. The communication groove 251 is partly located in the first cavity 21 and partly located in the second cavity 22, so that the communication groove 251 communicates the first cavity 21 with the second cavity 22. The air in the first cavity 21 and the air the second cavity 22 may be exchanged through the communication groove 251, so that the air in the first cavity 21 and the air in the second cavity 22 can flow between the first cavity 21 and the second cavity 22, thereby accelerating reduction of the pressure difference between the first cavity 21 and the second cavity 22.

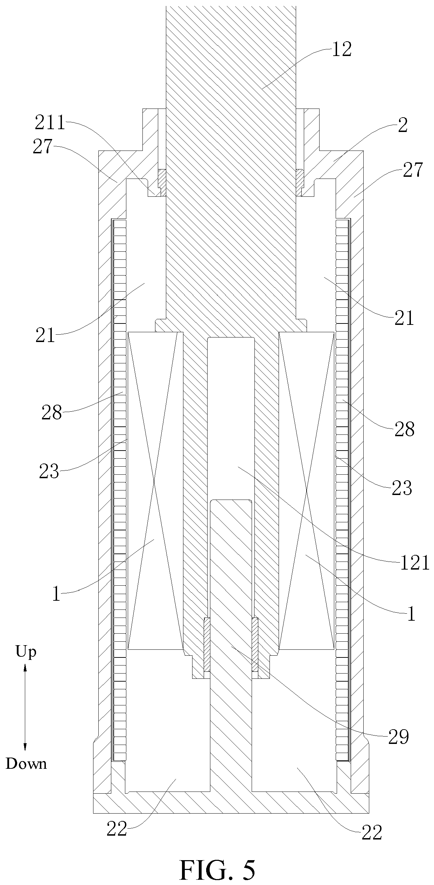

Referring to FIG. 5 and FIG. 6, according to some embodiments of the present invention, a plurality of communication grooves 251 are provided. The plurality of communication grooves 251 are spaced apart along a circumferential direction of the motor housing 27. The plurality of communication grooves 251 may increase a communication area between the first cavity 21 and the second cavity 22, thereby accelerating efficiency of airflow between the first cavity 21 and the second cavity 22. In addition, the plurality of communication grooves 251 are spaced apart along the circumferential direction of the motor housing 27, so that air flows evenly between the first cavity 21 and the second cavity 22.

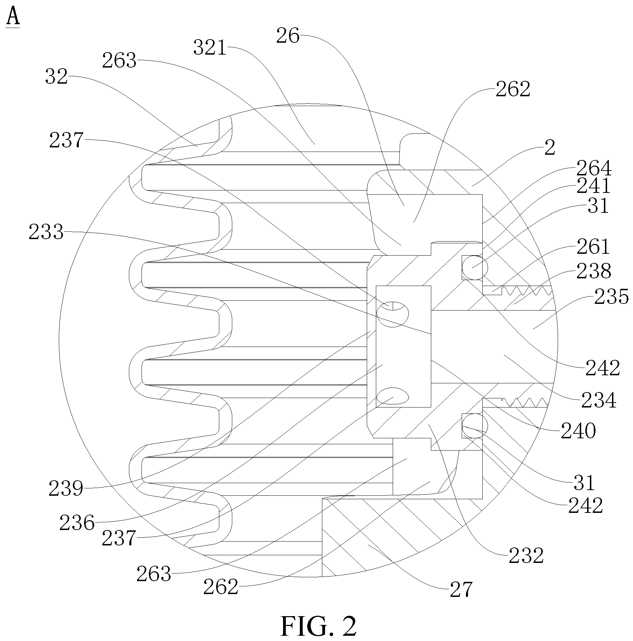

Referring to FIG. 1 and FIG. 2, according to some embodiments of the present invention, the linear motor 100 further includes a dustproof cover 32. The dustproof cover 32 covers an outer peripheral side of the mover assembly 2, and the dustproof cover 32 and the mover assembly 2 jointly define a dustproof cavity 321. The first cavity 21 is in communication with the dustproof cavity 321 through the breathable valve 231. The dustproof cavity 321 forms at least a part of the external space of the mover assembly 2. The air in the first cavity 21 may be exchanged with air in the dustproof cavity 321, to implement adjustment on the pressure in the first cavity 21. In addition, the dustproof cavity 321 can effectively isolate other debris (for example, dust) from entering the first cavity 21 through the breathable valve 231, thereby prolonging the service life of the linear motor 100.

According to an embodiment of the present invention, the linear motor 100 might include a connection cover 11. The connection cover 11 is located on a side of the mover assembly 2 that is adjacent to the first cavity 21 and is connected to the stator assembly 1. The connection cover 11 is located on a side of the mover assembly 2 that is adjacent to the first cavity 21. One end of the dustproof cover 32 is connected to the connection cover 11, and the other end of the dustproof cover 32 is connected to the mover assembly 2, which can effectively prevent other debris (for example, dust) from entering the mover assembly 2. The dustproof cover 32 can play a protective role on the mover assembly 2 and a joint between the mover assembly 2 and the stator assembly 1, and can prevent the other debris (for example, the dust) from directly entering the inside of the mover assembly 2 or from entering the inside of the mover assembly 2 through the joint between the mover assembly 2 and the stator assembly 1. In addition, the dustproof cover 32 is retractable along the axial direction of the mover assembly 2, so that the dustproof cover 32 can adapt to relative movement of the mover assembly 2 when the linear motor 100 is in operation, thereby improving a protective effect on the mover assembly 2.

When the linear motor 100 is used in an electromagnetic suspension of a vehicle, the connection cover 11 may be configured to connect to a vehicle body, and a lower end of the motor housing 27 may be connected to a wheel.

Referring to FIG. 1 and FIG. 3, according to some embodiments of the present invention, the linear motor 100 includes a stator shaft core 12. The stator assembly 1 is sleeved on an outer periphery of the stator shaft core 12 and is fixed relative to the stator shaft core 12. The stator assembly 1 includes a stator and a winding. A guide channel 121 extending along an axial direction of the stator shaft core 12 is formed on the stator shaft core 12. A guide rod 29 extending along the axial direction of the mover assembly 2 is arranged on the mover assembly 2. The guide rod 29 is slidably accommodated in the guide channel 121 along the axial direction of the stator assembly 1. The guide rod 29 may guide movement of the mover assembly 2. Through cooperation between the guide channel 121 and the guide rod 29, movement of the guide rod 29 may be guided and limited, to ensure that the guide rod 29 moves along a set direction and a set trajectory, and prevent the guide rod 29 from being separated from the stator shaft core 12 during sliding.

Referring to FIG. 1, the electromagnetic suspension according to an embodiment of the present invention might include the linear motor 100 according to the embodiment of the first aspect of the present invention.

According to the electromagnetic suspension of the present invention, the foregoing linear motor 100 might be arranged, and at least one of the first cavity 21 and the second cavity 22 that are located on the two sides of the stator assembly 1 is in communication with the external space of the mover assembly 2, so that the air in the first cavity 21 and the air in the second cavity 22 can be directly or indirectly exchanged with the air in the external space of the mover assembly 2. This helps quickly adjust the pressure in the first cavity 21 and the pressure in the second cavity 22, and reduce the pressure difference between the first cavity 21 and the second cavity 22, thereby reducing the thrust fluctuation caused by the impact of the pressure difference on the reciprocation of the linear motor 100, and reducing the energy loss.

Referring to FIG. 1, the vehicle according to an embodiment of a third aspect of the present invention includes the electromagnetic suspension according to the embodiment of the second aspect of the present invention.

According to the vehicle in this embodiment of the present invention, the foregoing electromagnetic suspension is arranged, where the electromagnetic suspension includes the linear motor 100, and at least one of the first cavity 21 and the second cavity 22 that are located on the two sides of the stator assembly 1 is in communication with the external space of the mover assembly 2, so that the air in the first cavity 21 and the air in the second cavity 22 can be directly or indirectly exchanged with the air in the external space of the mover assembly 2. This helps quickly adjust the pressure in the first cavity 21 and the pressure in the second cavity 22, and reduce the pressure difference between the first cavity 21 and the second cavity 22, thereby reducing the thrust fluctuation caused by the impact of the pressure difference on the reciprocation of the linear motor 100, and reducing the energy loss.

In the description of this specification, the description of the reference terms such as "an embodiment", "some embodiments", "exemplary embodiments", "example", "specific example", or "some examples" means that the specific features, structures, materials, or characteristics described with reference to the embodiment or example are included in at least one embodiment or example of the present invention. In this specification, schematic descriptions of the foregoing terms do not necessarily refer to a same embodiment or example. Moreover, the specific features, structures, materials, or characteristics described may be combined in an appropriate manner in any one or more embodiments or examples.

Although the embodiments of the present invention have been shown and described, a person of ordinary skill in the art should understand that various changes, modifications, replacements and variations may be made to the embodiments without departing from the principles of the present invention, and the scope of the present invention is as defined by the appended claims and their equivalents.

In the drawings:
100. Linear motor;
1. stator assembly; 11. connection cover; 12. stator shaft core; 121. guide channel;
2. mover assembly; 21. first cavity; 211. baffle; 22. second cavity; 23. air gap;
231. breathable valve; 232. valve body; 233. waterproof breathable membrane; 234. vent channel; 235. first channel section; 236. second channel section; 237. air vent; 238. valve main body; 239. valve cover; 240. first step surface; 241. third step surface; 242. sealing groove;
251. communication groove; 26. mounting hole; 261. first hole section; 262. second hole section; 263. vent groove; 264. second step surface;
27. motor housing; 28. magnetic steel; 29. guide rod;
31. sealing member; 32. dustproof cover; and 321. dustproof cavity.

## Claims

1. A linear motor, comprising:
a stator assembly; and
a mover assembly, being sleeved on an outer periphery of the stator assembly,
wherein a first cavity and a second cavity is located between the stator assembly and the mover assembly, the first cavity and the second cavity being separately located on two sides of an axial direction of the stator assembly such that the stator assembly and the mover assembly move relative to each other, the first cavity being in communication with the second cavity, and at least one of the first cavity and the second cavity being in communication with an external space of the mover assembly.

2. The linear motor according to claim 1, wherein an air gap is provided between the mover assembly and the stator assembly, and the first cavity is in communication with the second cavity through the air gap.

3. The linear motor according to claim 1 or 2, wherein a communication groove is provided on the mover assembly, and the first cavity communicates with the second cavity via the communication groove.

4. The linear motor according to any one of claims 1 to 3, wherein a breathable valve is arranged on the mover assembly, and the first cavity communicates with the external space of the mover assembly via the breathable valve.

5. The linear motor according to claim 4, wherein the breathable valve comprises a valve body and a waterproof breathable membrane, a vent channel communicating the first cavity with the external space of the mover assembly is located in the valve body, and the waterproof breathable membrane is arranged in the vent channel.

6. The linear motor according to claim 5, wherein the vent channel comprises a first channel section and a second channel section that are located on two opposite sides of the waterproof breathable membrane, the first channel section is adjacent to the first cavity relative to the second channel section and is in communication with the first cavity, and a vent hole communicating the first channel section with the external space of the mover assembly is located on a wall of the second channel section.

7. The linear motor according to claim 6, wherein the valve body comprises a valve main body and a valve cover, the vent channel is formed on the valve main body, the valve cover is connected to an end of the valve main body that is away from the first cavity and covers an end of the second channel section that is away from the waterproof breathable membrane, and the vent hole is formed on a peripheral wall of the second channel section;
optionally wherein a plurality of vent holes are provided, and the plurality of vent holes are spaced apart along a circumferential direction of the second channel section.

8. The linear motor according to claim 6 or 7, wherein a first step surface is located on an inner wall of the vent channel, the first step surface is located between the first channel section and the second channel section, and the waterproof breathable membrane is fixed on the first step surface;
optionally wherein a cross-sectional area of the second channel section is greater than a cross-sectional area of the first channel section, and the waterproof breathable membrane is located in the second channel section.

9. The linear motor according to claim 7 or 8, wherein a mounting hole is provided on the mover assembly, the mounting hole comprises a first hole section and a second hole section that are provided along an axial direction of the mounting hole, the first hole section is close to the first cavity relative to the second hole section and is in communication with the first cavity, the valve body is connected to the first hole section, a vent groove that is in communication with the external space of the mover assembly is defined between an outer peripheral wall of the valve body and an inner peripheral wall of the second hole section, and the vent groove is located on an outer peripheral side of the second channel section and is in communication with the second channel section through the vent hole;
optionally wherein the outer peripheral wall of the valve body is spaced apart from the inner peripheral wall of the second hole section to form the vent groove.

10. The linear motor according to any one of claims 4 to 9, wherein the breathable valve is mounted on a peripheral wall of the mover assembly, and the breathable valve does not protrude from an outer peripheral wall surface of the mover assembly.

11. The linear motor according to any one of claims 4 to 10, wherein a mounting hole is provided on the mover assembly, and the breathable valve is mounted in the mounting hole; and the mounting hole comprises a first hole section and a second hole section that are provided along an axial direction of the mounting hole, the first hole section is close to the first cavity relative to the second hole section and is in communication with the first cavity, the breathable valve is connected to the first hole section, a second step surface is formed between the first hole section and the second hole section, a third step surface is formed on an outer peripheral wall of the breathable valve, and the third step surface abuts against or is connected to the second step surface;
optionally wherein a cross-sectional area of the second hole section is greater than a cross-sectional area of the first hole section;
optionally comprising a sealing member, wherein a sealing groove is formed on the third step surface, and the sealing member is accommodated in the sealing groove and sealingly abuts against or is sealingly connected to the second step surface.

12. The linear motor according to any one of claims 4 to 11, wherein a baffle is arranged on the mover assembly, the baffle is located in the first cavity, and the baffle is arranged opposite to the breathable valve and is spaced apart from the breathable valve; optionally wherein the baffle and the mover assembly are integrally formed.; and/or
wherein the axial direction of the stator assembly extends along an up-down direction, the first cavity is located above the stator assembly, and the second cavity is located below the stator assembly; optionally wherein the breathable valve is arranged at an upper end of the mover assembly; and/or
wherein the mover assembly comprises a motor housing and magnetic steel, the magnetic steel is fixed on an inner wall of the motor housing, and the breathable valve is arranged on the motor housing and located on a side of an axial direction of the magnetic steel; optionally wherein a communication groove is formed on the inner peripheral wall of the motor housing, and the communication groove is partly located in the first cavity and partly located in the second cavity; and/or
further comprising a dustproof cover, wherein the dustproof cover covers an outer peripheral side of the mover assembly, the dustproof cover and the mover assembly jointly define a dustproof cavity, the first cavity is in communication with the dustproof cavity through the breathable valve, and the dustproof cavity forms at least a part of the external space of the mover assembly.

13. The linear motor according to any one of claims 1 to 12, comprising a stator shaft core, wherein the stator assembly is sleeved on an outer periphery of the stator shaft core and is fixed relative to the stator shaft core, a guide channel extending along an axial direction of the stator shaft core is formed on the stator shaft core, a guide rod extending along an axial direction of the mover assembly is arranged on the mover assembly, and the guide rod is slidably accommodated in the guide channel along the axial direction of the stator assembly.

14. An electromagnetic suspension, comprising:
the linear motor according to any one of claims 1 to 13.

15. A vehicle, comprising: the electromagnetic suspension according to claim 14.
